# EUROPÄISCHE PATENTSCHRIFT

(11) **EP 1 186 081 B1**
(45) Veröffentlichungstag und Bekanntmachung des Hinweises auf die Patenterteilung: **03.11.2010**
(21) Anmeldenummer: 01909827.6
(22) Anmeldetag: 08.03.2001
(51) Int. Cl.: H02B 1/052

(54) **ADAPTERPLATTE UND SYSTEM ZUR ANBRINGUNG EINES BAUELEMENTES AUF EINE MONTAGEUNTERLAGE**
ADAPTER PLATE AND SYSTEM FOR MOUNTING A COMPONENT ON AN ASSEMBLY BASE
PLAQUE D'ADAPTATION ET SYSTEME POUR MONTER UN COMPOSANT SUR UN SUPPORT DE MONTAGE

(30) Priorität: 17.03.2000 DE 10013111
(43) Veröffentlichungstag der Anmeldung: 13.03.2002
(73) Patentinhaber: AEG Niederspannungstechnik GmbH & Co. KG, 24534 Neumünster (DE)
(72) Erfinder: OHRT, Rüdiger, 24113 Kiel (DE); BAUER, Rolf-Dieter, 24211 Rastorf (DE); SUDAN, Madhu, 3, Bharati Layout, 1st Main Road, Suddagunta Palya, 560 029 Bangalore (IN)
(74) Vertreter: TBK-Patent
(86) Internationale Anmeldenummer: PCT/EP2001/002627
(87) Internationale Veröffentlichungsnummer: WO 2001/069738

(56) Entgegenhaltungen:
- EP-A- 0 190 373
- DE-A- 3 931 708
- US-A- 5 316 164

## Beschreibung

Die Erfindung bezieht sich auf eine Adapterplatte und ein System zur Anbringung eines Bauelements auf eine Montageunterlage. Die Erfindung bezieht sich insbesondere auf die Verwendung der Adapterplatte zur Anbringung eines Leistungsschutzschalters auf eine Montageplatte eines Schaltschranks.

Eine Adapterplatte mit den Merkmalen des Oberbegriffes des Anspruchs 1 ist in US-A-5 316 164 offenbart.

In der Praxis besteht das Problem der Anbringung eines Bauelements auf eine Montageunterlage unter Zwischenschaltung oder ohne Zwischenschaltung eines mit der Montageunterlage fest verbundenen Befestigungselements, wie zum Beispiel eine Schiene, die an der Montageunterlage in Form einer Platte angelötet oder angeschweißt ist.

Aufgabe der Erfindung ist es, eine Adapterplatte sowie ein verbessertes System zur Montage eines Bauelements, insbesondere eines elektrischen Leistungsschalters auf eine Montageunterlage unter oder ohne Zwischenschaltung eines mit der Montageunterlage fest verbundenen Befestigungselements zur Verfügung zu stellen.

Diese Aufgabe wird durch die im Patentanspruch 1 definierte Merkmalskombination gelöst. Vorteilhafte Weiterbildungen der Erfindung sind in den Unteransprüchen angegeben.

Die Erfindung wird im folgenden anhand eines Ausführungsbeispiels unter Bezugnahme auf Zeichnungen näher erläutert.

Es zeigen:
Fig. 1: eine seitliche teilweise Schnittansicht des erfindungsgemäßen Systems zur Montage eines elektrischen Leistungsschalters auf einer Montageplatte in einem ersten Montagezustand;
Fig. 2: eine seitliche teilweise Schnittansicht des erfindungsgemäßen Systems zur Montage eines elektrischen Leistungsschalters auf einer Montageplatte in einem zweiten Montagezustand;
Fig. 3: eine räumliche Darstellung einer im System gemäß Figuren 1 und 2 verwendeten Adapterplatte von ihrer einen Seite gesehen;
Fig. 4: eine räumliche Darstellung einer im System gemäß Figuren 1 und 2 verwendeten Adapterplatte von der anderen Seite betrachtet;
Fig. 5: eine räumliche Darstellung des Gehäuses eines elektrischen Leistungsschalters, auf der insbesondere der Bodenabschnitt des Gehäuses zu erkennen ist.

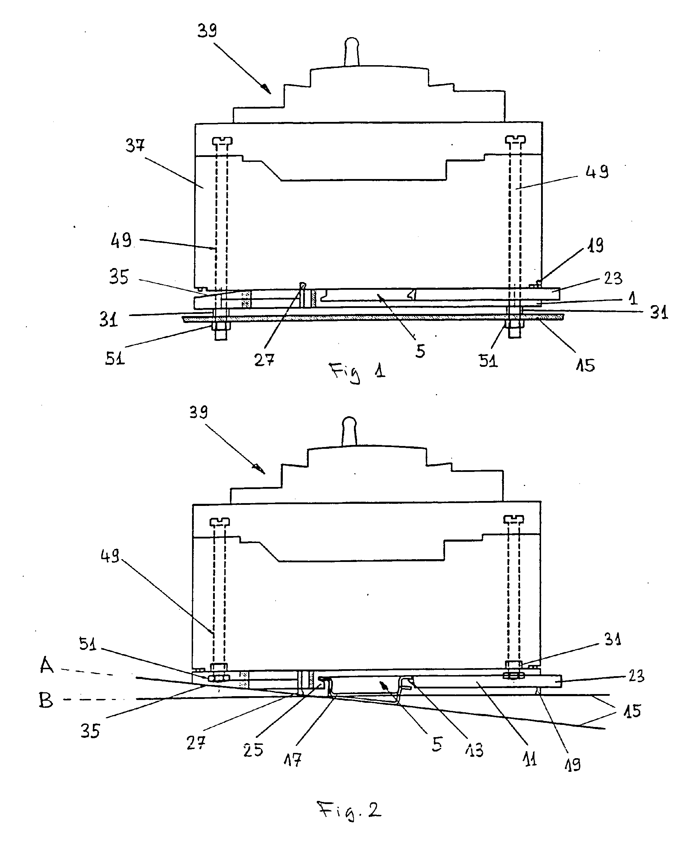

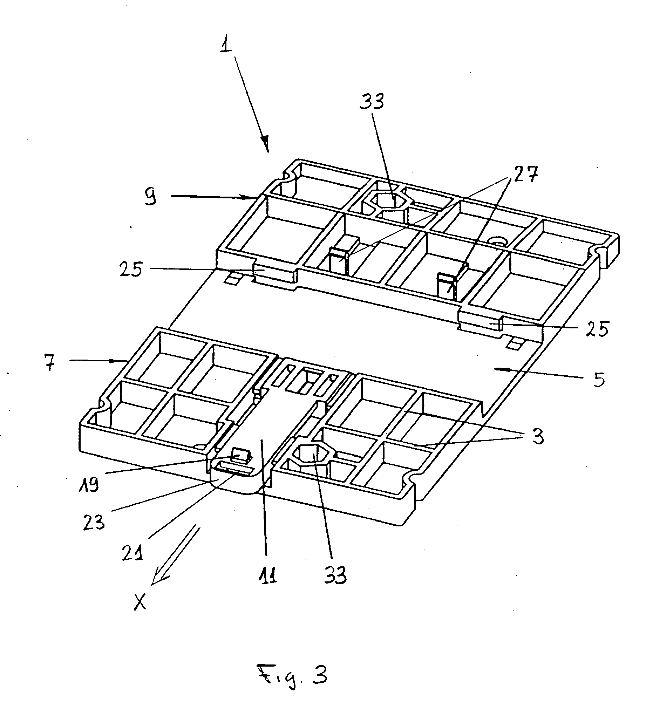

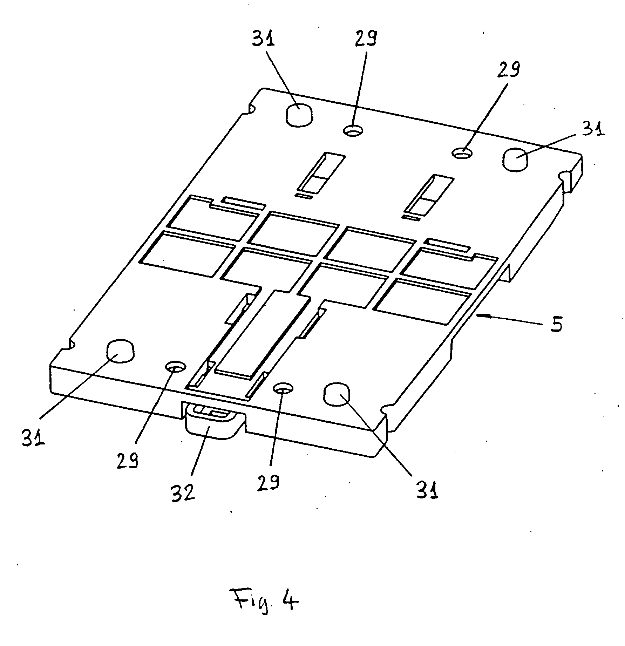

Die in den Figuren 1 und 2 gezeigte Ausführungsform eines Systems zur Montage von Leistungsschaltern besteht im wesentlichen aus einer Adapterplatte 1, deren konstruktive Besonderheiten in den Figuren 3 und 4 gezeigt sind.

Wie die Figuren 3 und 4 zeigen, stellt die Adapterplatte 1 ein teilweise kastenförmiges Kunststoffspritzteil mit Verstärkungsrippen 3 dar. Das Kunststoffspritzteil ist auf der einen Seite offen und wie in Fig. 3 gezeigt, durch eine durchgehende Montagenut 5 in zwei Kastenabschnitte 7 und 9 geteilt. Im ersten Kastenabschnitt 7 ist ein in Richtung des Pfeiles X gegen die Vorspannung einer nicht gezeigten Feder ausziehbares Verschlusselement 11 gleitend aufgenommen. Das eine Ende des Verschlusselements 11 ist mit einer ersten Einschnappzunge 13 versehen, die im unbetätigten Zustand des Verschlusselements 11 sich in die Montagenut 5 hineinerstreckt, so wie das im einzelnen in Fig. 2 gezeigt ist. Der Abstand der Einschnappzunge 13 vom Boden der Montagenut 5 entspricht im wesentlichen der Blechdicke einer an einer Montageplatte 15 befestigten U-förmigen Montageschiene 17.

An seinem anderen Ende hat das Verschlusselement 11 eine zweite, senkrecht zur Ebene der Adapterplatte 1 vorstehende zweite Einschnappzunge 19 sowie einen vom Seitenrand des ersten Kastenabschnitts 7 vorstehenden mit einer Ausnehmung 21 versehenen Betätigungsabschnitt 23.

An der die Montagenut 5 bildenden Seitenwand des zweiten Kastenabschnitts 9 befinden sich zwei, in Gegenüberlage zur ersten Einschnappzunge 13 angeordnete und sich in die Montagenut 5 hineinerstreckende Einrastabschnitte 25. An der selben Seitenwand sind in Gegenüberlage zur Einschnappzunge 19 zwei weitere Einschnappabschnitte 27 ausgebildet. Die Adapterplatte 1 hat auch vier Durchgangslöcher 29 sowie vier Abstandhalter 31, die auf der Darstellung der Fig. 4 im einzelnen zu erkennen sind. In der offenen Seite der Adapterplatte 1 sind von den vier Durchgangslöchern 29 zwei zueinander diagonal angeordneten Durchgangslöcher von Sechskantschächten 33 umgeben. Der zweite Kastenabschnitt 9 hat auf der in Fig. 3 gezeigten Seite der Adapterplatte 1 auch einen zum Plattenrand hin abfallenden Unterabschnitt 35.

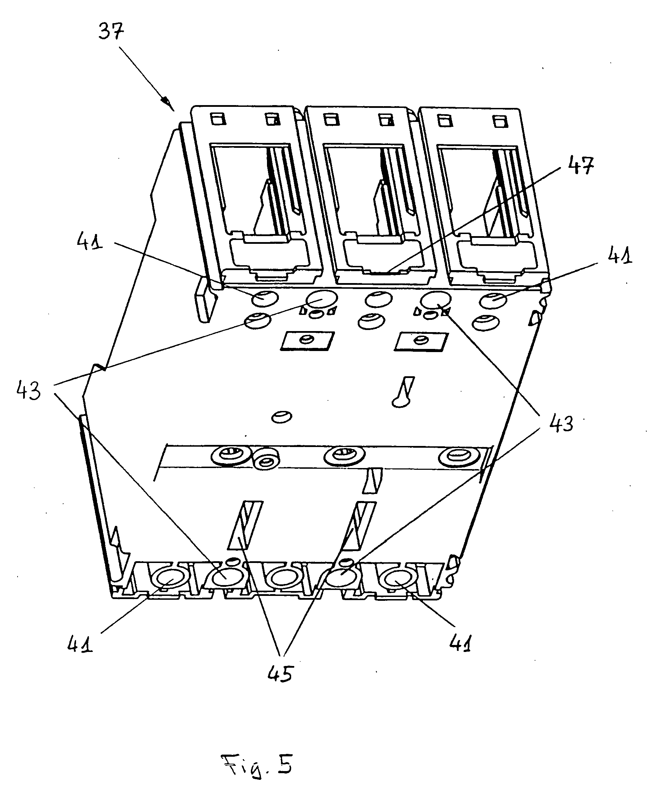

Die oben beschriebene Adapterplatte 1 ist passend zu dem in Fig. 5 gezeigten Gehäuse 37 eines dreiphasigen Leistungsschalters 39 ausgebildet. Auf der Bodenseite des Gehäuses 37 sind vier Vertiefungen 41 entsprechend der Lage der Abstandhalter 31 der Adapterplatte 1 vorgesehen. Im Gehäuse 37 sind ebenfalls vier Durchgangslöcher 43 entsprechend der Lage der Durchgangslöcher 29 der Adapterplatte 1 ausgebildet. Die Bodenseite des Gehäuses 37 hat schließlich zwei sich in Längsrichtung des Gehäuses erstreckende rechteckige Öffnungen 45, die ausreichend breit sind, um die Aufnahme der hinsichtlich ihrer Lage korrespondierenden Einschnappabschnitte 27 der Adapterplatte 1 zu ermöglichen.

Um den in Fig. 1 gezeigten Montagezustand zu erreichen, wird die Adapterplatte 1 mit ihrer in Fig. 3 gezeigten, nach oben gerichteten Seite an den in Fig. 5 ersichtlichen Boden des Gehäuses 37 des Leistungsschalters angebracht. Diese Anbringung erfolgt, in dem die Einschnappabschnitte 27 in die entsprechend ausgebildeten rechteckigen Öffnungen 45 des Gehäuses 37 gelangen und anschließend die Einschnappzunge 19 durch Herausziehen des Verschlusselements 11 über den auf der Seite des Gehäuses 37 gebildeten Randabschnitt 47 einschnappt. In diesem Zustand sind die als Noppen ausgebildeten Abstandhalter 31 nach unten zu der Montageplatte 15 hin gerichtet und werden auf diese aufgesetzt. Danach werden Montageschrauben 49 zusammen mit den einzelnen Phasen des Leistungsschalters 39 in das Gehäuse 37 eingesetzt, so dass die Montageschrauben 49 die Aufnahmelöcher 43 und die korrespondierenden Durchgangslöcher 29 der Adapterplatte 1 sowie nicht im einzelnen gezeigte Montagelöcher in der Montageplatte 15 durchsetzen.
In diesem Zustand werden die Enden der Schrauben 49 mit Muttern 51 versehen und die aufeinander gestapelten Adapterplatte 1, Gehäuse 37 und Leistungsschalter 39 durch Anziehen der Muttern 51 an der Montageplatte 15 befestigt.

Wenn umgekehrt der in Fig. 2 gezeigte Montagezustand erreicht werden soll, dann wird die Adapterplatte 1 in die in Fig. 4 gezeigte Position umgedreht und an den Boden des in Fig. 5 gezeigten Gehäuses des Leistungsschalters angebracht. Zu diesem Zweck werden in die in Fig. 3 gezeigten Sechskantschächte 33 passende Mutter 51 gesteckt, die dann nach Umdrehen der Adapterplatte mit den von oben durch das Gehäuse 37 ragenden Schrauben 49 verschraubt werden. Im montierten Zustand der Adapterplatte ragen die Abstandhalter 31 in die in Fig. 5 gezeigten Vertiefungen 41 hinein, so dass eine genaue Positionierung der Adapterplatte in Bezug auf das Gehäuse 37 erreicht wird. Anschließend wird die Leistungsschalter-Adapterplatte-Kombination in eine in Fig. 2 mit dem Bezugszeichen "A" gekennzeichnete imaginäre relative Lage in bezug auf die Montageplatte gebracht, so dass die Adapterplatte mit der Oberfläche ihres abfallenden Unterabschnitts 35 auf der Montageplatte 15 aufliegt. Als nächstes wird die Leistungsschalter-Adapterplatte-Kombination vermittels der Einrastabschnitte 25 in die sich im wesentlichen horizontal erstreckenden Lippenabschnitte der Montageschiene 17 eingehakt und anschließend die ganze Leistungsschalter-Adapterplatte-Kombination mit einer Kippbewegung solange nach unten gedrückt, bis die Einschnappzunge 13 des Verschlusselements 11 hinter den gegenüberliegenden Lippenabschnitt der Montageschiene 17 einrastet. Dieser Endzustand ist in Fig. 2 mit dem Bezugszeichen "B" gekennzeichnet. Es ist dabei zu beachten, dass die Einschnappzunge 13 eine in Fig. 2 von oben links nach unten rechts geneigte Stirnfläche aufweist, die mit dem horizontalen Lippenabschnitt der Montageschiene 17 derart in Anlage bringbar ist, dass das Verschlusselement 11 gegen die Vorspannung der nicht im einzelnen gezeigten Feder zunächst nach rechts in Fig. 2 verschoben wird, um dann bei fortschreitendem Absenken der Adapterplatte hinter dem horizontalem Lippenabschnitt der Montageschiene 17 einzurasten.

Durch die oben beschriebene Adapterplatte ist es möglich, Leistungsschalter auf einer Montageplatte 15 in gleicher Höhe unabhängig davon anzubringen, ob die Montageplatte 15 eine Montageschiene 17 aufweist oder nicht.

Verschiedene Abwandlungen des oben beschriebenen erfindungsgemäßen Systems zur Montage von Leistungsschaltern sind möglich. So zum Beispiel können die Einschnappabschnitte 27 der Adapterplatte 1 derart ausgebildet sein, dass ihre aus der Adapterplatte in Fig. 3 nach oben ragenden Kanten in der Ebene des abfallenden Unterabschnitts 35 der Adapterplatte 1 liegen und so bemessen sind, dass ihre Verbindungslinie die Achse bildet, um die das Abkippen der Leistungsschalter-Adapterplatte-Kombination in Fig. 2 bis zum Einrasten der Einschnappzunge 13 erfolgt.

## Patentansprüche

1. Adapterplatte zur Anbringung eines Bauelements (37) an eine Montageunterlage (15) unter Zwischenschaltung der Adapterplatte, wobei die Adapterplatte auf ihrer einen Seite mindestens einen Koppelmechanismus (11, 13, 25; 11, 19, 27) aufweist, **dadurch gekennzeichnet, daß** der Koppelmechanismus derart ausgebildet ist, daß er wahlweise die Anbringung der Adapterplatte (1) an die Montageunterlage (15) oder an das Bauelement (37) ermöglicht.

2. Adapterplatte nach Anspruch 1, **dadurch gekennzeichnet, daß** die Adapterplatte auf ihrer einen Seite einen ersten Koppelmechanismus (11, 13, 25) zur Anbringung der Adapterplatte (1) an die Montageunterlage (15) sowie einen zweiten (11, 19, 27) zur Anbringung der Adapterplatte an das Bauelement (37) aufweist, wobei beide Koppelmechanismen durch ein gemeinsames Betätigungselement (11) betätigbar sind.

3. Adapterplatte nach Anspruch 2, **gekennzeichnet durch** mindesten einen auf ihrer anderen Seite ausgebildeten Vorsprung (31), der bei einer Kopplung des Koppelmechanismus (11, 13, 25) an die Montageunterlage (15) in das Bauelement (37) steckbar und bei einer Kopplung des Koppelmechanismus (11, 19, 27) an das Bauelement (37) auf die Montageunterlage (15) abstützbar ist.

4. Verwendung einer Adapterplatte nach einem der Ansprüche 1 bis 4 zur Anbringung eines Leistungsschalters an eine Montageunterlage (15) eines Schaltschranks.

5. System zur Anbringung eines Bauelements (37) an eine Montageunterlage (15) unter Zwischenschaltung der Adapterplatte nach einem der Ansprüche 2 oder 3, wobei die Montageunterlage (15) eine Montageplatte darstellt.

6. System nach Anspruch 6, **dadurch gekennzeichnet, daß** die Montageplatte (15) eine darauf befestigte U-förmige Schiene (17) aufweist, deren Enden durch parallel zur Montageplatte (15) verlaufende Lippenabschnitte gebildet sind.

7. System nach Anspruch 5, **dadurch gekennzeichnet, daß** der zweite Koppelmechanismus (11, 19, 27) an das Bauelement (37) gekoppelt ist und das Bauelement (37) unter Durchsetzung der Adapterplatte (1) mit der Montageplatte (15) verbunden ist.

8. System nach Anspruch 6, **dadurch gekennzeichnet, daß** der erste Koppelmechanismus (11, 13, 25) an die Schiene (17) gekoppelt ist, wobei das Bauelement (37) durch Schrauben (49) mit der Adapterplatte (1) verbunden ist.

9. System nach einem der Ansprüche 5 bis 8, **dadurch gekennzeichnet, daß** der erster Koppelmechanismus (11, 13, 25) mehrere, sich seitlich in eine Montagenut (5) der Adapterplatte (1) erstreckende und mit den Lippenabschnitten der Schiene (17) in Eingriff bringbare Vorsprünge (13, 25) und der zweite Koppelmechanismus (11, 19, 27) mehrere von der einen Seite der Adapterplatte (1) ragende, mit dem Bodenabschnitt des Bauelements (37) in Eingriff bringbare Vorsprünge (19, 27) aufweisen, wobei mindestens ein Vorsprung (13, 19) eines jeden Koppelmechanismus am Betätigungselement (11) ausgebildet ist.

10. System nach Anspruch 9, **dadurch gekennzeichnet, daß** das Betätigungselement (11) ein längliches, in der Adapterplatte (1) gleitend gelagertes, sich senkrecht zur Montagenut (5) erstreckendes und gegen die Montagenut (5) mittels einer Feder vorgespanntes Element (11) darstellt.

## Claims

1. Adapter plate for attaching a component (37) to a mounting support (15) with the adapter plate interposed, wherein the adapter plate has on its one side at least one coupling mechanism (11, 13, 25; 11, 19, 27), **characterized in that** the coupling mechanism is configured to optionally allow the adapter plate (1) to be attached to the mounting support (15) or to the component (37).

2. Adapter plate according to Claim 1, **characterized in that** the adapter plate has on its one side a first coupling mechanism (11, 13, 25) for attaching the adapter plate (1) to the mounting support (15) and a second coupling mechanism (11, 19, 27) for attaching the adapter plate to the component (37), both coupling mechanism being operable by a common operating element (11).

3. Adapter plate according to Claim 2, **characterized by** at least one projection (31) formed on its other side which can be plugged into the component (37) in the case where the coupling mechanism (11, 13, 25) is coupled to the mounting support and can be supported on the mounting support (15) in the case where the coupling mechanism (11, 19, 27) is coupled to the component (37).

4. Use of an adapter plate according to any one of Claims 1 to 4 [*sic*] for attaching a power switch to a mounting support (15) of a switch cabinet.

5. System for attaching a component (37) to a mounting support (15) with the adapter plate according to either of Claims 2 and 3 interposed, wherein the mounting support (15) is constituted by a mounting plate.

6. System according to Claim 6, **characterized in that** the mounting plate (15) has a channel rail (17) fixed to it whose ends are formed by lip portions running parallel with the mounting plate (15).

7. System according to Claim 5, **characterized in that** the second coupling mechanism (11, 19, 27) is coupled to the component (37), and the component (37) is attached to the mounting plate (15) with the adapter plate (1) transfixed.

8. System according to Claim 6, **characterized in that** the first coupling mechanism (11, 13, 25) is coupled to the rail (17), the component (37) being connected to the adapter plate (1) by screws (49).

9. System according to any one of Claims 5 to 8, **characterized in that** the first coupling mechanism (11, 13, 25) has a plurality of projections (13, 25) extending laterally into a mounting slot (5) of the adapter plate (1) and engageable with the lip portions of the rail (17), and the second coupling mechanism (11, 19, 27) has a plurality of projections (19, 27) jutting from one side of the adapter plate (1) and engageable with the bottom portion of the component (37), at least one projection (13, 19) of each coupling mechanism being formed on the operating element (11).

10. System according to Claim 9, **characterized in that** the operating element (11) is constituted by an elongate element (11) slidably mounted in the adapter plate (1), extending perpendicularly to the mounting slot (5), and urged towards the mounting slot (5) by means of a spring.

## Revendications

1. Plaque d'adaptation pour monter un composant (37) sur un support de montage (15), avec interposition de la plaque d'adaptation, la plaque d'adaptation présentant, sur un de ses côtés, au moins un mécanisme de couplage (11, 13, 25 ; 11, 19, 27), **caractérisée en ce que** le mécanisme de couplage est réalisé de manière qu'il permette au choix l'adjonction de la plaque d'adaptation (1) au support de montage (15) ou au composant (37).

2. Plaque d'adaptation selon la revendication 1, **caractérisée en ce que** la plaque d'adaptation présente, sur un de ses côtés, un premier mécanisme de couplage (11, 13, 25) pour l'adjonction de la plaque d'adaptation (1) au support de montage (15), ainsi qu'un deuxième mécanisme de couplage (11, 19, 27) pour l'adjonction de la plaque d'adaptation au composant (37), les deux mécanismes de couplage étant susceptibles d'être actionnés par un élément d'actionnement (11) commun.

3. Plaque d'adaptation selon la revendication 2, **caractérisée par** une saillie (31) réalisée sur son autre faxe, susceptible d'être enfichée dans le composant (37) lors d'un couplage du mécanisme de couplage (11, 13, 25) au support de montage (15), et étant susceptible d'être soutenu sur le support de montage (15) lors d'un couplage du mécanisme de couplage (11, 19, 27) au composant (37).

4. Utilisation d'une plaque d'adaptation selon l'une des revendications 1 à 4, pour adjonction d'un interrupteur de puissance à un support de montage (15) d'une armoire de commande.

5. Système de montage d'un composant (37) sur un support de montage (15), avec interposition de la plaque d'adaptation selon l'une des revendications 2 ou 3, le support de montage (15) constituant une plaque de montage.

6. Système selon la revendication 6, **caractérisé en ce que** la plaque de montage (15) présente un rail (17) en forme de U, fixé sur elle, dont les extrémités sont formées par des tronçons de lèvre s'étendant parallèlement à la plaque de montage (15).

7. Système selon la revendication 5, **caractérisé en ce que** le deuxième mécanisme de couplage (11, 19, 27) est couplé au composant (37), et le composant (37) est relié à la plaque de montage (15) avec passage à travers la plaque d'adaptation (1).

8. Système selon la revendication 6, **caractérisé en ce que** le premier mécanisme de couplage (11, 13, 25) est couplé au rail (17), le composant (37) étant relié à la plaque d'adaptation (1) par des vis.

9. Système selon l'une quelconque des revendications 5 à 8, **caractérisé en ce que** le premier mécanisme de couplage (11, 13, 25) présente plusieurs saillies (13, 25), s'étendant latéralement dans une rainure de montage (5) de la plaque d'adaptation (1) et susceptibles d'être mises en prise avec les tronçons de lèvre du rail (17), et le deuxième mécanisme de couplage (11, 19, 27) présente plusieurs saillies (19, 27), ressortant d'un côté de la plaque d'adaptation (1), susceptibles d'être mises en prise avec le tronçon de fond du composant (37), au moins une saillie (13, 19) de chaque mécanisme de couplage étant réalisée sur l'élément d'actionnement (11).

10. Système selon la revendication 9, **caractérisé en ce que** l'élément d'actionnement (11) constitue un élément (11) allongé, monté à glissement dans la plaque d'adaptation (1), s'étendant perpendiculairement à la rainure de montage (5) et précontraint contre la rainure de montage (5) à l'aide d'un ressort.
